# EUROPEAN PATENT SPECIFICATION

(11) **EP 3 395 117 B1**
(45) Date of publication and mention of the grant of the patent: **09.09.2020**
(21) Application number: 17752681.1
(22) Date of filing: 16.02.2017
(51) Int. Cl.: H04W 74/08, H04W 72/12, H04W 16/14, H04W 74/00, H04W 76/10

(54) **LISTEN BEFORE TALK CHANNEL ACCESS PROCEDURE FOR UPLINK LAA**
LISTEN-BEFORE-TALK-KANALZUGANGSVERFAHREN FÜR UPLINK-LAA
PROCÉDURE D'ACCÈS À UN CANAL D'ÉCOUTE AVANT DE PARLER POUR UN LAA DE LIAISON MONTANTE

(30) Priority: 16.02.2016 US 201662295589 P; 31.03.2016 US 201662315697 P; 14.02.2017 US 201715432022
(43) Date of publication of application: 31.10.2018
(73) Proprietor: HFI Innovation Inc., Hsinchu County 302 (TW)
(72) Inventor: YANG, Weidong, San Diego, California 92130 (US); CHEN, Bo-Si, Keelung City 202, TW (TW); LI, Chien-Chang, Penghu County 880, TW (TW); CHEN, Yih-Shen, Hsinchu County 302, TW (TW); NUGGEHALLI, Pavan Santhana Krishna, Mountain View, California 94040 (US)
(74) Representative: Hoefer & Partner Patentanwälte mbB
(86) International application number: PCT/CN2017/073755
(87) International publication number: WO 2017/140249

(56) References cited:
- WO-A1-2014/178678
- CN-A- 104 717 687
- CN-A- 104 812 032
- CN-A- 104 994 591
- CN-A- 105 101 446
- US-A1- 2015 071 220
- US-A1- 2015 085 797
- QUALCOMM INCORPORATED: "UL Channel Access", 3GPP DRAFT; R1-160890 UL CHANNEL ACCESS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. St. Julian's, Malta; 20160215 - 20160219 6 February 2016 (2016-02-06), XP051064437, Retrieved from the Internet: URL:http://www.3gpp.org/ftp/tsg_ran/WG1_RL 1/TSGR1_84/Docs/ [retrieved on 2016-02-06]
- ERICSSON: "On Coordinated UL Channel Access for Enhanced LAA", 3GPP DRAFT; R1-161000, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. St. Julian's, Malta; 20160215 - 20160219 6 February 2016 (2016-02-06), XP051064484, Retrieved from the Internet: URL:http://www.3gpp.org/ftp/tsg_ran/WG1_RL 1/TSGR1_84/Docs/ [retrieved on 2016-02-06]
- SONY CORPORATION: "UL Channel access mechanism design in eLAA", 3GPP DRAFT; R1-160674, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. St Julian's, Malta; 20160215 - 20160219 6 February 2016 (2016-02-06), XP051064302, Retrieved from the Internet: URL:http://www.3gpp.org/ftp/tsg_ran/WG1_RL 1/TSGR1_84/Docs/ [retrieved on 2016-02-06]
- 'Broadband Radio Access Networks (BRAN); 5 GHz high performance RLAN; Harmonized EN covering the essential requirements of article 3.2 of the R&TTE Directive' ETSI EN 301 893 V1.8.1 31 March 2015, XP055408665

## Description

### TECHNICAL FIELD

The disclosed embodiments relate generally to wireless communication, and, more particularly, to Listen Before Talk (LBT) channel access procedure for uplink licensed assisted access (LAA). In particular, the present invention relates to a method and a device according to the precharacterising parts of the independent claims 1 and 2. Such a method is shown in QUALCOMM INCORPORATED: "UL Channel Access", 3GPP DRAFT; R1-160890, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, RAN WG1, St. Julian's, Malta; 6 February 2016 (20016-02-06).

### BACKGROUND

At licensed spectrum, there is only one owner of that spectrum in an area, which facilitates to create a single depot of information for base stations (eNBs). For example, eNBs under one operator can exchange channel state information and scheduling information. With single cell scheduling, radio resource access is typically controlled by eNB in an LTE system. In Coordinated Multipoint Operation (CoMP) and eCoMP, centralized or distributed scheduling can be used to coordinate the transmissions from eNBs with a direct goal to achieve either higher SINRs or interference mitigation. A salient point about (e)CoMP is identified as information exchange is through a network link which is either proprietary or standard based (e.g. X2). Typically, the exchanged information carried over those links need to happen with latency up to tens of milliseconds. In summary, interference handling is a central issue in wireless communications and the sole ownership of licensed spectrum has enabled information exchange among eNBs under one operator to achieve effective interference handling.

Third generation partnership project (3GPP) and Long Term Evolution (LTE) mobile telecommunication systems provide high data rate, lower latency and improved system performances. With the rapid development of "Internet of Things" (IOT) and other new user equipment (UE), the demand for supporting machine communications increase exponentially. To meet the demand of this exponential increase in communications, additional spectrum (i.e. radio frequency spectrum) is needed. The amount of licensed spectrum is limited. Therefore, communications providers need to look to unlicensed spectrum to meet the exponential increase in communication demand. One suggested solution is to use a combination of licensed spectrum and unlicensed spectrum. This solution is referred to as "Licensed Assisted Access" or "LAA".

In LAA, an established communication protocol such as LTE can be used over the licensed spectrum to provide a first communication link, and LTE can also be used over the unlicensed spectrum to provide a second communication link. Furthermore, while LAA only utilizes the unlicensed spectrum to boost downlink through a process of carrier aggregation, enhanced LAA (eLAA) allows uplink streams to take advantage of the unlicensed bands as well. The unlicensed band could be ISM band (Industrial Scientific Medical Band) at 2.4GHz or 5GHz, or it could be CBRS band (Citizens Broadband Radio Service band) at 3.5GHz as long as no spectrum auction procedure takes place. Although eLAA is straight forward in theory, practical usage of eLAA while complying with various government regulations regarding the usage of unlicensed spectrum is not so straightforward. As no entity, network operator or otherwise, has a monopoly of using a certain frequency spectrum in an area, there can be wireless communication equipments outside the control of an operator which interfere with that operator's equipments. Furthermore, there is no single depot where information about channel states and traffic converge. As a result, the interference handling schemes developed at licensed spectrum such as (e)CoMP, (e)ICIC, etc. may no longer work at unlicensed spectrum. Hence, there is a need to coordinate the transmissions from equipments made by different eNB vendors, or allow collaboration among equipments made by different eNB vendors.

Listen-before-talk (LBT) schemes are discussed for solving the issue caused from the coexistence between WiFi and Licensed Assisted Access (LAA) and between LAA and LAA. To facilitate efficient and fair spectrum sharing, the dynamic spectrum sharing mechanism LBT need to be supported for both downlink LAA and uplink LAA based on regulation rules in each country. When more than one UEs contend uplink transmission for a given time slot in unlicensed band, a solution for efficient uplink channel access procedure based on LBT is sought.

### SUMMARY

A method of dynamic spectrum sharing mechanism called listen-before-talk (LBT) is proposed for uplink transmission in Licensed Assisted Access (LAA). In accordance with one novel aspect, a maximum channel occupancy time (MCOT) including downlink (DL) transmission from one eNB and uplink (UL) transmission to the same eNB is introduced. A transmission sequence is defined as a number of subframes including possible partial subframes for DL and/or UL within a MCOT. The transmission in the first subframe among the transmission sequence is conducted after a Category 4 LBT. The transmission sequence within the MCOT can be initiated by either a DL transmission or an UL transmission. After the first subframe in a transmission sequence, LBT for another transmission is a fast DL LBT and/or fast UL LBT. Further, a Category 4 LBT can be converted to a short LBT (e.g., one shot CCA) for more efficient channel access.

In one embodiment, a wireless device performs a first listen-before-talk (LBT) channel access procedure to contend for a wireless channel and initiate a transmission sequence starting with a first subframe. The wireless device receives scheduling information from a base station for uplink transmission of a second subsequent subframe. The wireless device performs a second LBT channel access procedure for the second subframe if the second subframe belongs to the same transmission sequence. The wireless device performs a first LBT channel access procedure if the second subframe does not belong to the same transmission sequence and if a fast channel access condition is not satisfied.

Further details and embodiments and methods are described in the detailed description below. This summary does not purport to define the invention. The invention is defined by the claims.

### BRIEF DESCRIPTION OF DRAWINGS

The accompanying drawings, where like numerals indicate like components, illustrate embodiments of the invention.
Figure 1 illustrates an exemplary Licensed Assisted Access (LAA) wireless network that adopts listen before talk (LBT) channel access mechanism in accordance with embodiments of the current invention.
Figure 2 illustrates an exemplary block diagram of a User Equipment (UE) and a base station (eNB) in accordance with embodiments of the current invention.
Figure 3 illustrates a listen before talk (LBT) channel access mechanism based on initial CCA and extended CCA with distributed control in accordance with embodiments of the current invention.
Figure 4 illustrates a transmission sequence initiated with a downlink transmission.
Figure 5 illustrates a transmission sequence initiated with an uplink transmission.
Figure 6 illustrates one embodiment of conversion of LBT in accordance with one novel aspect.
Figure 7 illustrates one embodiment of signaling the remaining duration in a transmission sequence.
Figure 8 illustrates one embodiment of uplink transmission under consecutive scheduling.
Figure 9 is a flow chart of a method of channel access procedure involving uplink LBT in accordance with one novel aspect.

### DETAILED DESCRIPTION

Reference will now be made in detail to some embodiments of the invention, examples of which are illustrated in the accompanying drawings.

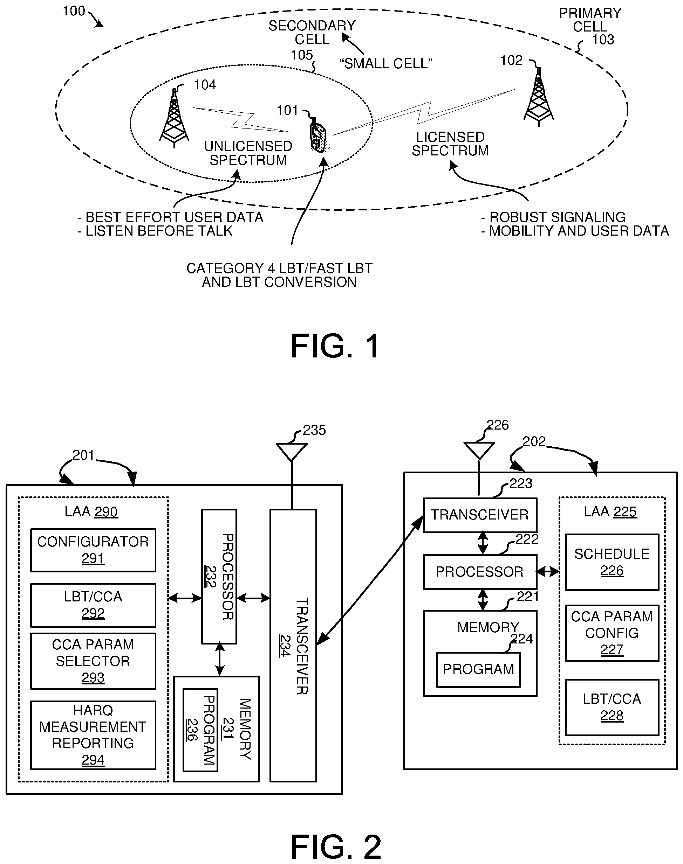

Figure 1 illustrates an exemplary Licensed Assisted Access (LAA) wireless communications system 100 that adopts listen before talk (LBT) channel access mechanism in accordance with embodiments of the current invention. Wireless communications system 100 includes one or more wireless communication networks, and each of the wireless communication networks has base infrastructure units, such as 102 and 104. The base units may also be referred to as an access point, an access terminal, a base station, eNB, or by other terminology used in the art. Each of the base stations 102 and 104 serves a geographic area. The geographic area served by wireless communications stations 102 and 104 overlaps in this example.

Base station 102 is a licensed base station that communicates with UE 101 via a licensed frequency band. In one example, base station 102 communicates with UE 101 via Long-Term Evolution (LTE) wireless communication. Base station 102 provides wireless communication to multiple UEs within primary cell 103. Base station 104 is an unlicensed base station that communicates with UE 101 via an unlicensed frequency band. In one example, base station 104 communicates with UE 101 via LTE wireless communication. Base station 104 can communicate with multiple UEs with a secondary cell 105. Secondary cell 105 is also referred to as a "small cell".

The exponential growth in data consumption has created large bandwidth demands that cannot be met by current wireless systems. To meet this ever-increasing demand for data, new wireless systems with greater available bandwidth are needed. Licensed Assisted Access (LAA) wireless networks can be used to provide greater available bandwidth. A LAA network utilizes unlicensed frequency bands in addition to licensed frequency bands contemporaneously, thereby provided additional available bandwidth to the UEs in the wireless system. For example, UE 101 can benefit from simultaneous use of the licensed frequency band and the unlicensed frequency band in a LAA network. The LAA network not only provides additional bandwidth for greater overall data communication, but also provide consistent data connectivity due to the presence of two separate data links. Having multiple data links available increases the probability that the UE will be able to achieve proper data communication with at least one base station at any given moment. While utilization of the unlicensed spectrum provides more available bandwidth, the use of the unlicensed spectrum faces practical problems that need to be addressed.

To facilitate efficient and fair spectrum sharing, a dynamic spectrum sharing mechanism called listen-before-talk (LBT) is supported based on regulation rules in each country. However, the performance of LAA with LBT mechanism may not satisfy the purpose of efficient and fair spectrum sharing. In accordance with one novel aspect, a maximum channel occupancy time (MCOT) including DL transmission from one eNB and UL transmission to the same eNB is introduced. A transmission sequence is defined as a number of subframes including possible partial subframes for DL and/or UL within a MCOT. The transmission in the first subframe among the transmission sequence, which can be over a partial subframe, is conducted after a Category 4 LBT. The node performing the Category 4 LBT can be either an eNB or a UE. A sequence of transmission including DL and/or UL can follow the transmission on the first subframe. The transmission sequence within the MCOT can be initiated by either a DL transmission or an UL transmission. The duration of a transmission sequence is called transmission duration. After the first subframe in a transmission sequence, LBT for another transmission should be faster compared to the Category 4 LBT, e.g., fast DL LBT and/or fast UL LBT. Further, a Category 4 LBT can be converted to a short LBT (e.g., one shot CCA) for more efficient channel access.

Figure 2 illustrates the various components included in a UE 201 and a base station 202. Base station 202 may have an antenna array 226 with one or more antennas, which transmit and receive radio signals. An RF transceiver module 223, coupled with the antenna, receives RF signals from antenna array 226, converts them to baseband signals and sends them to processor 222. RF transceiver 223 also converts received baseband signals from processor 222, converts them to RF signals, and sends out to antenna array 226. Processor 222 processes the received baseband signals and invokes different functional modules to perform features in base station 202. Memory 221 stores program instructions and data 224 to control the operations of base station 202. Base station 202 also includes a set of control modules and circuits - LAA controller 225 that carries out functional tasks to configure, schedule, execute and communicate with the UE 201 for LAA tasks such as described in detail below. In one example, LAA controller 225 includes a scheduler 226 that schedules downlink and uplink transmission for the UEs including UE 201, a CCA parameter configurator 227 that determines CCA parameters for each traffic type, and a LBT/CCA channel access handler 228 that ensures BS 202 only transmits radio signals over the shared medium when the channel is idle or when it wins the channel contention via LBT/CCA channel access procedure.

User equipment UE 201 has an antenna array 235 with one or more antennas, which transmit and receive radio signals. An RF transceiver module 234, coupled with the antenna, receives RF signals from antenna array 235, converts them to baseband signals and sends them to processor 232. RF transceiver 234 also converts received baseband signals from processor 232, converts them to RF signals, and sends out to antenna 235. Processor 232 processes the received baseband signals and invokes different functional modules to perform features in UE 201. Memory 231 stores program instructions and data 236 to control the operations of UE 201.

UE 201 also includes a set of control modules and circuits including LLA controller 290 that carry out functional tasks. The control modules and circuits can be implemented and configured by hardware, firmware, software, and a combination thereof. Configurator 291 obtains various configuration and parameters from the network for LBT/CCA operation. LBT/CCA channel access handler 292 ensures that UE 201 does not transmit signals when another unlicensed frequency band eNB/UE is transmitting. CCA parameter selector 293 determines CCA parameters for each traffic type. Measurement and reporting circuit 294 performs Hybrid Automatic Repeat Request (HARQ) and CSI/RRM measurements and reports the HARQ feedback and measurement results to its serving base station.

There are four different categories of channel access schemes for accessing a shared wireless medium. Category 1 (No LBT) means no LBT procedure is performed by the transmitting entity. Category 2 (LBT without random backoff) means the duration of time that the channel is sensed to be idle before the transmitting entity transmits is deterministic. For Category 3 (LBT with random backoff with a contention window of fixed size), the transmitting entity draws a random number N within a contention window. The size of the contention window is specified by the minimum and maximum value of N. The size of the contention window is fixed. The random number N is used in the LBT procedure to determine the duration of time that the channel is sensed to be idle before the transmitting entity transmits on the channel. For Category 4 (LBT with random backoff with a contention window of variable size), the transmitting entity draws a random number N within a contention window. The size of the contention window is specified by the minimum and maximum value of N. The transmitting entity can vary the size of the contention window when drawing the random number N. The random number N is used in the LBT procedure to determine the duration of time that the channel is sensed to be idle before the transmitting entity transmits on the channel.

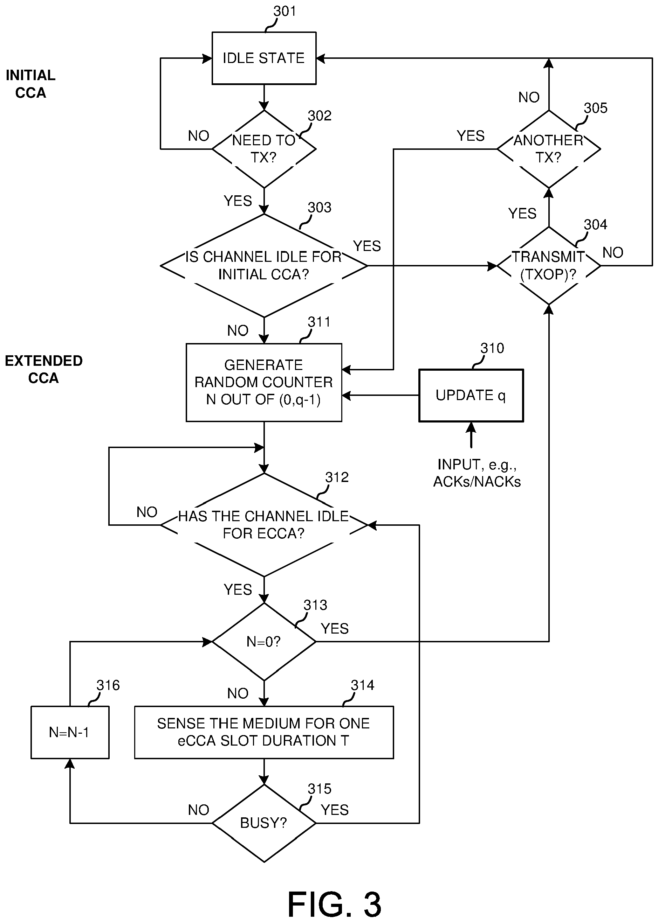

Figure 3 illustrates a Category 4 listen before talk (LBT) channel access mechanism based on initial clear channel assessment (initial CCA) and extended CCA. Based on the Category 4 LBT procedure, a transmitter is allowed to transmit radio signals onto the shared wireless medium depending on CCA sensing and a deferral or backoff procedure for channel access contention as long as the CCA indicates the channel is idle. The LBT procedure allows the transmitter to gain access to the shared wireless medium, e.g., to obtain a transmitting opportunity (TXOP) for transmitting radio signals onto the shared wireless medium. The basic assumption of LBT is that a packet collision can occur if a device transmits signal under the channel busy condition when the received signal level is higher than a CCA level, e.g., an energy detection (ED) threshold or a preamble detection (PD) threshold. Furthermore, LBT is a form of differentiated QoS. Traffic can be classified into four access categories (AC): AC_VI (for video), AC_VO (for voice), AC_BE (for best effort), and AC_BK (for background). Each device is expected to access the channel based on the AC-specific LBT parameters to which the traffic belongs.

In step 301, a wireless device (an eNB/UE) is in idle state. Note that, here, the idle state refers a behavior that the device does not trigger any transmission or reception operations. In step 302, the eNB/UE determines whether it needs to transmit. If no, it returns to idle state; if yes, it goes to step 303 and checks whether the wireless channel is idle for the initial CCA period (BiCCA, e.g., 34us). If the answer is yes, then the eNB/UE transmits radio signals in step 304 and checks if it has obtained the transmit opportunity (TXOP). If the answer is no, then it goes back to idle state; if the answer is yes, then it goes to step 305 and determines whether it needs another transmission. If the answer is no, then it goes back to idle state.

If the answer to step 303 is no, or if the answer to step 305 is yes, then the eNB/UE goes to step 311 and enters the extended CCA procedure. In step 311, the eNB/UE generates a random backoff counter N out of the contention window size q (e.g., N is generated from 0 to q-1). In step 312, the eNB/UE checks whether the wireless channel has been idle for the extended CCA defer period (DeCCA, e.g., 34us). If the answer is no, then it goes back to step 312; if the answer is yes, then it goes to step 313 and checks whether the random backoff counter N is equal to zero. If the answer is yes, then it goes to step 304 for transmission; if the answer is no, then it goes to step 314 and senses the wireless medium for one eCCA time slot duration T (e.g., T=9us). In step 315, the eNB/UE checks whether the wireless channel is busy. If the answer is yes, then it goes back to step 312; if the answer is no, then it goes to step 816 and reduces the random backoff counter N by one (e.g., N=N-1), and then goes to step 313 to check whether counter N is equal to zero. Note that based on the ECCA procedure, when the channel is busy, the eNB/UE shall defer transmission until the wireless channel has been determined to be idle for an uninterrupted deferred period.

In the Category 4 LBT channel access mechanism of Figure 3, several CCA/eCCA parameters such as the initial CCA period (BiCCA), the contention window size q, the eCCA defer period (DeCCA), and the eCCA slot duration (T) can be used to control how aggressively a node contends for channel access. The initial CCA period (BiCCA), the contention window size q, the eCCA defer period (DeCCA), the eCCA slot duration (T), CCA ED (energy detection) threshold, CCA PD (preamble detection) threshold, eCCA ED threshold, and eCCA PD threshold are all possible knobs to turn. The parameters for category 4 LBT procedure are {BiCCA, q, DeCCA, T, CCA threshold, eCCA threshold}. In addition, the smaller the initial CCA period/the contention window size/the eCCA defer period/the eCCA slot duration, and the higher the CCA ED (energy detection) threshold/CCA PD (preamble detection) threshold/eCCA ED (energy detection) threshold/eCCA PD (preamble detection) threshold, a transmitting node contends for channel access more aggressively.

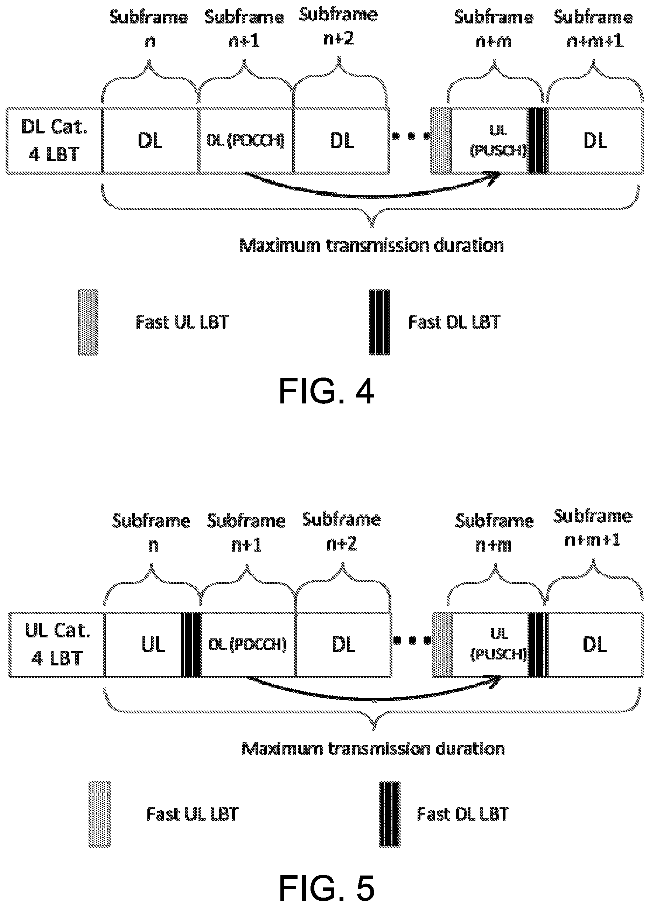

Figure 4 illustrates a transmission sequence initiated with a downlink transmission. After the first subframe in a transmission sequence, the LBT procedure for another transmission within the same transmission sequence should be fast (e.g., Category 2 LBT) as compared to the downlink Category 4 LBT. In Figure 4, the transmission on the first subframe of the transmission sequence is for DL after performing the downlink Category 4 LBT, then a fast UL LBT such as a one shot CCA can be used in the switch from DL transmission to UL transmission. If there is another DL transmission coming after the UL transmission, a fast DL LBT such as a one shot CCA for the DL transmission can be used.

Figure 5 illustrates a transmission sequence initiated with an uplink transmission. After the first subframe in a transmission sequence, the LBT procedure for another transmission within the same transmission sequence should be fast (e.g., Category 2 LBT) as compared to the uplink Category 4 LBT. In Figure 5, the transmission on the first subframe of the transmission sequence is for UL after performing the uplink Category 4 LBT, then a fast DL LBT such as a one shot CCA can be used in the switch from UL transmission to DL transmission. If there is another UL transmission coming after the DL transmission, a fast UL LBT such as a one shot CCA for the UL transmission can be used.

In the example of Figure 5, eNB can give multiple UEs uplink grant at subframe n, and each of the UEs conducts a Category 4 LBT to hold the channel. If too many UEs are assigned to do so, then uplink channel access at subframe n can be rather aggressive. There may be a room to limit the number of UEs conducting Category 4 LBT simultaneously, so only a few UEs contending for uplink channel access. Also, the buffer status of those UEs can be taken into consideration in determining the maximum transmission duration in the case of the first subframe being for uplink transmission.

It is noted that a Category 4 LBT is performed to gain a channel autonomously by UE. On the other hand, a short LBT such as one shot CCA is performed on an already held channel over a subframe within the maximum transmission duration. Under some conditions, a Category 4 LBT can be converted into a short LBT.

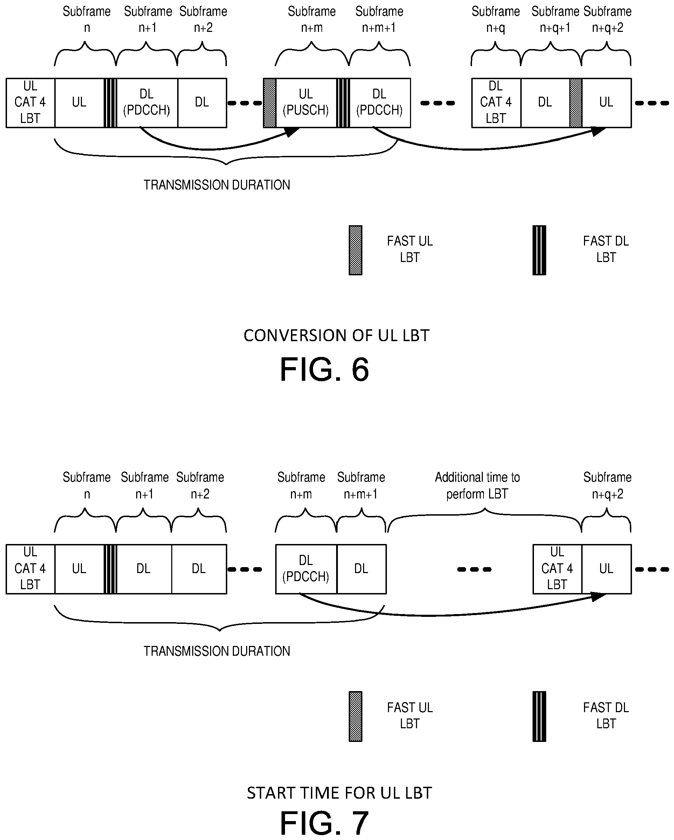

Figure 6 illustrates one embodiment of conversion of LBT in accordance with one novel aspect. In the example of Figure 6, when a UE is scheduled in subframe n+m+1 to transmit in subframe n+q+2, as subframe n+q+2 cannot be covered by the MCOT starting from subframe n, subframe n+q+2 does not belong to the same transmission sequence starting from subframe n. As a result, the UE is expected to perform a Category 4 LBT before subframe n+q+2. However, since the eNB is successful in holding the channel from subframe n+q+1, performing the Category 4 LBT becomes unnecessary. Therefore, the UE just performs a fast UL LBT before subframe n+q+2. In another word, a Category 4 LBT is converted into a fast LBT (e.g., one shot CCA). Note that conversion needs to be facilitated through a downlink signaling or detection on the UE side on the CRS signal in subframe n+q+1. The downlink signaling can be sent from the same carrier or a different carrier as for the scheduled uplink transmission.

Figure 7 illustrates one embodiment of signaling the remaining duration in a transmission sequence. In the example of Figure 7, as eNB has the intention to hold the channel until subframe n+m+1, the start time for Category 4 LBT should be after the end of a transmission sequence. It can be seen that the remaining duration of the transmission sequence thus needs to be indicated in PDCCH. As a result, the UE scheduled for uplink transmission knows when the current transmission sequence ends and the to start a Category 4 LBT. For example, when a UE is scheduled in subframe n+m to transmit in subframe n+q+2, the uplink grant in PDCCH should indicate the remaining duration of the transmission sequence.

Further, for the uplink grant sent in subframe n+m, the grant in PDCCH should include the LBT parameters for a Category 4 LBT. Depending on whether an eNB can schedule UEs with LBTs at different priority classes at the same subframe, the eNB can signal the LBT parameters such as the contention window size or backoff counter value to a UE. The signaling can be indicated through several ways. First, the LBT parameter is signaled as part of the dedicated uplink grant message, e.g., through adding a new field in DCI format 0 and 4, introducing a field for the LBT parameter in a new DCI format for LAA uplink grant. Second, the LBT parameter can be signaled in a common message, e.g., by adding a new field in the common PDCCH format for LAA. For example, four bits are used to indicate the subframe structure of the current subframe or next subframe, there are reserved bits can be converted to carry the LBT parameter.

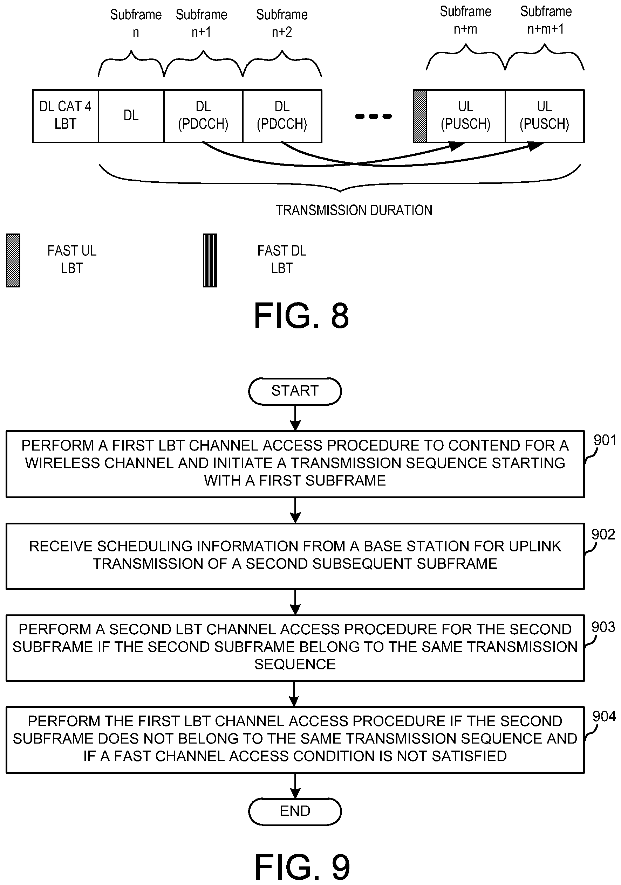

Figure 8 illustrates one embodiment of uplink transmission under consecutive scheduling. When a UE is granted uplink transmission in consecutive subframes and when all of them are within the maximum transmission duration shown in Figure 8, it is enough for the UE to perform LBT on the first UL subframe (Subframe n+m), and forgo LBTs on the rest of them.

Figure 9 is a flow chart of a method of channel access procedure involving uplink LBT in accordance with one novel aspect. In step 901, a wireless device performs a first listen-before-talk (LBT) channel access procedure to contend for a wireless channel and initiate a transmission sequence starting with a first subframe. In step 902, the wireless device receives scheduling information from a base station for uplink transmission of a second subsequent subframe. In step 903, the wireless device performs a second LBT channel access procedure for the second subframe if the second subframe belongs to the same transmission sequence. In step 904, the wireless device performs a first LBT channel access procedure if the second subframe does not belong to the same transmission sequence and if a fast channel access condition is not satisfied.

Although the present invention has been described in connection with certain specific embodiments for instructional purposes, the present invention is not limited thereto. Accordingly, various modifications, adaptations, and combinations of various features of the described embodiments can be practiced without departing from the scope of the invention as set forth in the claims.

## Claims

1. A method, comprising:
performing (901) a first listen-before-talk, in the following also referred to as LBT, channel access procedure by a wireless device (101, 201) to contend for a wireless channel and to initiate a transmission sequence starting with a first subframe;
receiving (902) scheduling information from a base station for uplink transmission of a second subsequent subframe;
**characterized by**
performing (903) a second LBT channel access procedure for the second subframe if the second subframe belongs to the same transmission sequence, wherein the second LBT time is no longer than the first LBT time; and
performing (904) the first LBT channel access procedure for the second subframe if the second subframe does not belong to the same transmission sequence and if a fast channel access condition is not satisfied:
wherein the fast channel access condition means that the wireless channel is held by the base station (102, 104, 202) at the time of uplink transmission of the second subframe.

2. A wireless device (101, 201), comprising:
a channel access handling circuit that performs a first listen-before-talk, in the following also referred to as LBT, channel access procedure to contend for a wireless channel and initiate a transmission sequence starting with a first subframe;
a receiver (234) that receives scheduling information from a base station (102, 104, 202) for uplink transmission of a second subsequent subframe; and
**characterized by**
the channel access handling circuit that performs a second LBT channel access procedure for the second subframe if the second subframe belongs to the same transmission sequence, wherein the second LBT time is no longer than the first LBT time, and wherein the wireless device performs the first LBT channel access procedure for the second subframe if the second subframe does not belong to the same transmission sequence and if a fast channel access condition is not satisfied:
wherein the fast channel access condition means that the wireless channel is held by the base station at the time of uplink transmission of the second subframe.

3. The method of Claim 1 or the wireless device of Claim 2, wherein the first LBT channel access procedure involves an initial clear channel assessment, in the following also referred to as CCA, sensing and an extended CCA sensing.

4. The method of Claim 1 or the wireless device of Claim 2, wherein the second LBT channel access procedure involves a one-shot clear channel assessment, in the following also referred to as CCA, sensing.

5. The method of Claim 1 or the wireless device of Claim 2, wherein the transmission sequence comprises a number of subframes within a maximum channel occupancy time, in the following also referred to as MCOT.

6. The method of Claim 1 or the wireless device of Claim 2, wherein the scheduling information comprises information on remaining duration of the transmission sequence.

7. The method of Claim 1 or the wireless device of Claim 2, wherein the scheduling information comprises LBT parameters including a contention window size and a backoff counter value.

8. The method of Claim 1 or the wireless device of Claim 2, wherein the wireless device converts the first LBT channel access procedure to the second LBT channel access procedure if the fast channel access condition is satisfied.

9. The method of Claim 1 or the wireless device of Claim 2, wherein the fast channel access condition is satisfied if the wireless device (101, 201) receives a downlink signaling in a third subframe preceding the second subframe.

10. The method of Claim 1 or the wireless device of Claim 2, wherein the fast channel access condition is satisfied if the wireless device (101, 201) detects a reference signal from a third subframe preceding the second subframe.

## Patentansprüche

1. Verfahren, umfassend:
Ausführen (901) einer ersten Listen-Before-Talk-, im Folgenden auch als LBT bezeichnet, Kanalzugriffsprozedur durch eine Funkvorrichtung (101, 201), um sich für einen Funkkanal zu bewerben und eine Übertragungssequenz zu initiieren, die mit einem ersten Unterrahmen beginnt;
Empfangen (902) von Zeiteinteilungsinformationen von einer Basisstation für eine Uplink-Übertragung eines zweiten nachfolgenden Unterrahmens;
**gekennzeichnet durch**
Ausführen (903) einer zweiten LBT-Kanalzugriffsprozedur für den zweiten Unterrahmen, wenn der zweite Unterrahmen zu der gleichen Übertragungssequenz gehört, wobei die zweite LBT-Zeit nicht länger ist als die erste LBT-Zeit; und
Ausführen (904) der ersten LBT-Kanalzugriffsprozedur für den zweiten Unterrahmen, wenn der zweite Unterrahmen nicht zu der gleichen Übertragungssequenz gehört, und wenn eine Bedingung eines schnellen Kanalzugriffs nicht erfüllt ist:
wobei die Bedingung des schnellen Kanalzugriffs bedeutet, dass der Funkkanal zu der Zeit einer Uplink-Übertragung des zweiten Unterrahmens durch die Basisstation (102, 104, 202) gehalten wird.

2. Funkvorrichtung (101, 201), aufweisend:
eine Kanalzugriffsbehandlungsschaltung, welche eine erste Listen-Before-Talk-, im Folgenden auch als LBT bezeichnet, Kanalzugriffsprozedur ausführt, um sich für einen Funkkanal zu bewerben und eine Übertragungssequenz zu initiieren, die mit einem ersten Unterrahmen beginnt;
einen Empfänger (234), welcher Zeiteinteilungsinformationen von einer Basisstation (102, 104, 202) für eine Uplink-Übertragung eines zweiten nachfolgenden Unterrahmens empfängt; und
**gekennzeichnet durch**
die Kanalzugriffsbehandlungsschaltung, welche eine zweite LBT-Kanalzugriffsprozedur für den zweiten Unterrahmen ausführt, wenn der zweite Unterrahmen zu der gleichen Übertragungssequenz gehört, wobei die zweite LBT-Zeit nicht länger ist als die erste LBT-Zeit, und wobei die Funkvorrichtung die erste LBT-Kanalzugriffsprozedur für den zweiten Unterrahmen ausführt, wenn der zweite Unterrahmen nicht zu der gleichen Übertragungssequenz gehört, und wenn eine Bedingung eines schnellen Kanalzugriffs nicht erfüllt ist:
wobei die Bedingung des schnellen Kanalzugriffs bedeutet, dass der Funkkanal zu der Zeit einer Uplink-Übertragung des zweiten Unterrahmens durch die Basisstation gehalten wird.

3. Verfahren gemäß Anspruch 1 oder Funkvorrichtung gemäß Anspruch 2, wobei die erste LBT-Kanalzugriffsprozedur eine anfängliche Clear-Channel-Assessment-, im Folgenden auch als CCA bezeichnet, Sondierung und eine erweiterte CCA-Sondierung einschließt.

4. Verfahren gemäß Anspruch 1 oder Funkvorrichtung gemäß Anspruch 2, wobei die zweite LBT-Kanalzugriffsprozedur eine einmalige Clear-Channel-Assessment-, im Folgenden auch als CCA bezeichnet, Sondierung durchführt.

5. Verfahren gemäß Anspruch 1 oder Funkvorrichtung gemäß Anspruch 2, wobei die Übertragungssequenz eine Anzahl von Unterrahmen innerhalb einer maximalen Kanalbelegungszeit, im Folgenden auch als MCOT bezeichnet, aufweist.

6. Verfahren gemäß Anspruch 1 oder Funkvorrichtung gemäß Anspruch 2, wobei die Zeiteinteilungsinformationen Informationen über eine verbleibende Dauer der Übertragungssequenz umfassen.

7. Verfahren gemäß Anspruch 1 oder Funkvorrichtung gemäß Anspruch 2, wobei die Zeiteinteilungsinformationen LBT-Parameter umfassen, die eine Zugangskonfliktfenstergröße und einen Rückzugszählerwert einschließen.

8. Verfahren gemäß Anspruch 1 oder Funkvorrichtung gemäß Anspruch 2, wobei die Funkvorrichtung die erste LBT-Kanalzugriffsprozedur in die zweite LBT-Kanalzugriffsprozedur konvertiert, wenn die Bedingung des schnellen Kanalzugriffs erfüllt ist.

9. Verfahren gemäß Anspruch 1 oder Funkvorrichtung gemäß Anspruch 2, wobei die Bedingung des schnellen Kanalzugriffs erfüllt ist, wenn die Funkvorrichtung (101, 201) eine Downlink-Signalisierung in einem dritten Unterrahmen empfängt, der dem zweiten Unterrahmen vorausgeht.

10. Verfahren gemäß Anspruch 1 oder Funkvorrichtung gemäß Anspruch 2, wobei die Bedingung des schnellen Kanalzugriffs erfüllt ist, wenn die Funkvorrichtung (101, 201) ein Referenzsignal von einem dritten Unterrahmen erfasst, der dem zweiten Unterrahmen vorausgeht.

## Revendications

1. Procédé, comprenant le fait :
d'effectuer (901) une première procédure d'accès au canal de type accès multiple avec écoute de porteuse « écouter avant de parler », ci-après également appelée LBT, par un dispositif sans fil (101, 201) pour prétendre à un canal sans fil et pour lancer une séquence de transmission commençant par une première sous-trame ;
de recevoir (902) des informations de programmation à partir d'une station de base pour une transmission en liaison montante d'une deuxième sous-trame suivante ;
**caractérisé par** le fait
d'effectuer (903) une deuxième procédure d'accès au canal LBT pour la deuxième sous-trame si la deuxième sous-trame appartient à la même séquence de transmission, où le deuxième temps LBT n'est pas plus long que le premier temps LBT ; et
d'effectuer (904) la première procédure d'accès au canal LBT pour la deuxième sous-trame si la deuxième sous-trame n'appartient pas à la même séquence de transmission et si une condition d'accès rapide au canal n'est pas satisfaite :
dans lequel la condition d'accès rapide au canal signifie que le canal sans fil est maintenu par la station de base (102, 104, 202) au moment de la transmission en liaison montante de la deuxième sous-trame.

2. Dispositif sans fil (101, 201), comprenant :
un circuit de gestion d'accès au canal qui effectue une première procédure d'accès au canal de type accès multiple avec écoute de porteuse « écouter avant de parler », ci-après également appelée LBT, pour prétendre à un canal sans fil et lancer une séquence de transmission commençant par une première sous-trame ;
un récepteur (234) qui reçoit des informations de programmation à partir d'une station de base (102, 104, 202) pour une transmission en liaison montante d'une deuxième sous-trame suivante ; et
**caractérisé en ce que**
le circuit de gestion d'accès au canal effectue une deuxième procédure d'accès au canal LBT pour la deuxième sous-trame si la deuxième sous-trame appartient à la même séquence de transmission, où le deuxième temps LBT n'est pas plus long que le premier temps LBT, et où le dispositif sans fil effectue la première procédure d'accès au canal LBT pour la deuxième sous-trame si la deuxième sous-trame n'appartient pas à la même séquence de transmission et si une condition d'accès rapide au canal n'est pas satisfaite :
dans lequel la condition d'accès rapide au canal signifie que le canal sans fil est maintenu par la station de base au moment de la transmission en liaison montante de la deuxième sous-trame.

3. Procédé de la revendication 1 ou dispositif sans fil de la revendication 2, dans lequel la première procédure d'accès au canal LBT implique une détection d'évaluation de canal libre, ci-après également appelée CCA, initiale et une détection CCA étendue.

4. Procédé de la revendication 1 ou dispositif sans fil de la revendication 2, dans lequel la deuxième procédure d'accès au canal LBT implique une détection d'évaluation de canal libre, ci-après également appelée CCA, monostable.

5. Procédé de la revendication 1 ou dispositif sans fil de la revendication 2, dans lequel la séquence de transmission comprend un certain nombre de sous-trames dans un temps d'occupation de canal maximal, ci-après également appelé MCOT.

6. Procédé de la revendication 1 ou dispositif sans fil de la revendication 2, dans lequel les informations de programmation comprennent des informations sur la durée restante de la séquence de transmission.

7. Procédé de la revendication 1 ou dispositif sans fil de la revendication 2, dans lequel les informations de programmation comprennent des paramètres LBT comportant une taille de fenêtre de contention et une valeur de compteur de réduction de puissance.

8. Procédé de la revendication 1 ou dispositif sans fil de la revendication 2, dans lequel le dispositif sans fil convertit la première procédure d'accès au canal LBT en la deuxième procédure d'accès au canal LBT si la condition d'accès rapide au canal est satisfaite.

9. Procédé de la revendication 1 ou dispositif sans fil de la revendication 2, dans lequel la condition d'accès rapide au canal est satisfaite si le dispositif sans fil (101, 201) reçoit une signalisation de liaison descendante dans une troisième sous-trame précédant la deuxième sous-trame.

10. Procédé de la revendication 1 ou dispositif sans fil de la revendication 2, dans lequel la condition d'accès rapide au canal est satisfaite si le dispositif sans fil (101, 201) détecte un signal de référence provenant d'une troisième sous-trame précédant la deuxième sous-trame.
